**Europäisches Patentamt**

**European Patent Office**

**Office européen des brevets**

(19)

(11) Veröffentlichungsnummer: **0 061 567**

**B1**

(12)

# EUROPÄISCHE PATENTSCHRIFT

(45) Veröffentlichungstag der Patentschrift:
**18.05.88**

(51) Int. Cl.⁴: **F 03 D 1/06**

(21) Anmeldenummer: **82100706.9**

(22) Anmeldetag: **02.02.82**

(54) Aerodynamischer Gross-Flügel und Verfahren zu dessen Herstellung.

(30) Priorität: **01.04.81 DE 3113079**

(43) Veröffentlichungstag der Anmeldung:
**06.10.82 Patentblatt 82/40**

(45) Bekanntmachung des Hinweises auf die Patenterteilung:
**18.05.88 Patentblatt 88/20**

(84) Benannte Vertragsstaaten:
**FR GB NL SE**

(56) Entgegenhaltungen:
**EP-A-0 019 691**
**EP-A-0 037 987**
**FR-A-888 216**
**FR-A-1 070 262**
**FR-A-1 100 249**
**FR-A-1 328 747**
**FR-A-2 186 380**
**FR-A-2 362 752**
**FR-A-2 456 230**
**FR-A-2 459 381**
**GB-A-578 485**
**GB-A-1 202 340**
**GB-A-2 062 120**
**US-A-2 659 444**
**US-A-3 018 832**
**US-A-3 093 219**
**US-A-3 096 826**
**US-A-3 310 117**

(73) Patentinhaber: **Messerschmitt- Bölkow- Blohm Gesellschaft mit beschränkter Haftung, Robert- Koch- Strasse, D-8012 Ottobrunn (DE)**

(72) Erfinder: **Hahn, Michael, Dipl.- Ing., Bahnhofstrasse 15 b, D-8012 Ottobrunn (DE)**
Erfinder: **Sperber, Franz, Ing.grad., Schwarzenbergstrasse 29, D-8206 Kolbermoor (DE)**

(56) Entgegenhaltungen: (Fortsetzung)
**US-A-3 333 642**
**US-A-3 356 153**

LIBER, STOCKHOLM 1988

EP 0 061 567 B1

## Beschreibung

Die Erfindung betrifft einen aerodynamischen Großflügel nach den Oberbegriff des Patentanspruchs 1.

Nach einem prioritätsälteren, nicht vorveröffentlichten Vorschlag der Anmelderin (EP-A-0 037 998) ist bereits ein Verfahren zur Herstellung von schaumkern-gestützten Rotorblättern großer Längen- und Breitenausdehnung in nicht-schließbaren Formen bekannt, bei dem

a) die aus den Außenhautlaminat bestehende Profilschale des Rotorblattes aus Faserverbund-Werkstoff in zwei getrennten Halbschalen laminiert und ausgehärtet wird,

b) der Schaumkern in jeder Halbschale des Rotorblattes direkt hergestellt und bearbeitet wird und

c) nach Bearbeitung der Trennebenen der Rotorblatt-Hälften diese miteinander verklebt werden,

und ferner wahlweise

- das entformte Rotorblatt mit Nasen- und Endkantenverstärkungen versehen wird,

- der Schaumkern in druckfester Form hergestellt und als Plattenmaterial eingesetzt und miteinander verklebt wird und

- das Plattenmaterial des Schaumkerns mittels Schaumkleber mit der Profilschale verbunden wird.

Ferner ist ein aerodynamischer Flügel bekannt (GB-A-1 202 340), der aus drei den Flügel-Querschnitt bildenden Modulen nämlich einer Nasenschale, einer Profilfahne und einem Mittelteil besteht und einem in Flügellängsrichtung verlaufenden Holm in Form eines im Inneren des Flügel-Mittelteils angeordneten Metallrohrs besitzt, das seinerseits mit den die mittleren Profilschalen-Abschnitte bildenden Profilhäuten verkleidet ist, welche dem Flügel das aerodynamische Profil verleihen.

Weiterhin bekannt ist ein zweigeteilter aerodynamischer Flügel in Faserverbund-Bauweis (FR-A-2 186 380), bei dem der eine Flügel-Modul aus einem ein Torsionsrohr bildenden Außenhautlaminat sowie einem im Inneren des Torsionsrohres angeordneten Flügelholm besteht, welcher zusätzlich zum Torsionsrohr als eigenes, hochfestes Bauteil mit oberen und unteren, unidirektionalen Faserverbund-Gurtlaminaten und einem stützend zwischen diesen angeordneten Schaumkern ausgebildet ist.

Insbesondere das zuerst genannte bekannte Verfahren zur Herstellung von schaumkern-gestützten Rotorblättern ist bei sehr großen Flügeln für Windenergie-Anlagen mit z. B. mehr als 70 m Länge und 7 m Profiltiefe in der Praxis nicht mehr anwendbar.

Es ist Aufgabe der Erfindung einen aerodynamischen Großflügel zu schaffen der relativ einfach herstellbar und handhabbar sowie durch ein hohes Verhältnis von Steifigkeit (Festigkeit) zu Masse ausgezeichnet ist.

Die erfindungsgemäße Lösung dieser Aufgabe erfolgt durch die Lehre nach dem Kennzeichen des Anspruchs 1.

Vorteile des erfindungsgemäßen Großflügels sind insbesondere:

- die Holm-Gurte liegen im größtmöglichen Abstand zur neutralen Achse und der Massenanteil der Steg-Einheit, die aus sehr leichtem Werkstoff besteht und nur einen Bruchteil des Innenvolumens des Flügel-Mittelteils ausfüllen kann, ist äußerst gering.

- die Holm-Gurte entsprechen dem Mittelteil des Flügelprofils, so daß keine zusätzlichen Verkleidungen des Holms (und damit Massen) benötigt werden;

- die Profilnase kann in einem Stück in guter aerodynamischer Qualität hergestellt werden;

- die Profilfahnen sind selbsttragend und gleich;

- die getrennte Herstellung der Module vereinfacht den Transport zum Einsatzort wo dann eine einfache Montage stattfindet.

Vorteilhafte Ausgestaltungen der Erfindung sind in den Ansprüchen 2 bis 25 angegeben.

Die nach den Ansprüchen 10 und 13 jeweils vorgesehenen, elastischen Fahnen die als dünne Laminat-Schichten ausgebildet sein können gestatten den Ausgleich kleiner Ungenauigkeiten beim Zusammenbau der Nasenschale und der Profilfahne mit dem Flügel-Mittelteil.

Verschraubungen zusätzlich zu Verklebungen (vergleiche z. B. die Ansprüche 15 und 16) erhöhen den Anpressdruck an den Klebestellen und wirken einer Schälung entgegen.

Durch die Lehre nach den Ansprüchen 17 - 21 wird eine weitere Vereinfachung von Herstellung, Transport und Montage vor Ort erreicht; zur Lehre nach dem Anspruch 21 vgl. auch die Parallelanmeldung der Anmelderin (DE-A-3 109 566), die diese Verbindungstechnik im einzelnen zum Gegenstand hat. Insbesondere folgende Werkstoffe sind geeignet:

- Für die Schaum-Steg-Einheit empfiehlt sich PVC-Schaum, der sich durch eine hohe dynamische Festigkeit auszeichnet, allerdings nicht frei schäumbar ist;

- Für die unidirektionalen Gurt-Laminate Faserverbund-Werkstoff aus Glas- oder Kohlefasern;

- Für die übrigen Laminate Glasfaser-Gewebe.

Anhand der Zeichnung wird die Erfindung beispielsweise näher erläutert. Es zeigen:

Fig. 1 einen Querschnitt durch ein Ausführungsbeispiel des erfindungsgemäßen Rotorblatts;

Fig. 2a - d die Herstellung des Mitteils des Rotorblatts von Fig. 1;

Fig. 3 die Herstellung der Nasenschale des Rotorblatts von Fig. 1;

Fig. 4 die Herstellung der Profilfahne des Rotorblatts von Fig. 1;

Fig. 5a, b die Unterteilung des Rotorblatts von Fig. 1 in Blatt-Längsrichtung in einzelne Segmente;

Fig. 6, 6a den Zusammenbau der einzelnen Module zum Rotorblatt von Fig. 1 und

Fig. 7 perspektivisch, teilweise im Schnitt, einen Abschnitt des erfindungsgemäßen Rotorblatts.

Im folgenden werden Bezugszahlen mit zusätzlichen kleinen Buchstaben "a" und "b" benutzt, um die Zuordnung von Bauteilen zu einer unteren Hälfte ("a") bzw. zu einer oberen Hälfte ("b") der einzelnen Module anzudeuten.

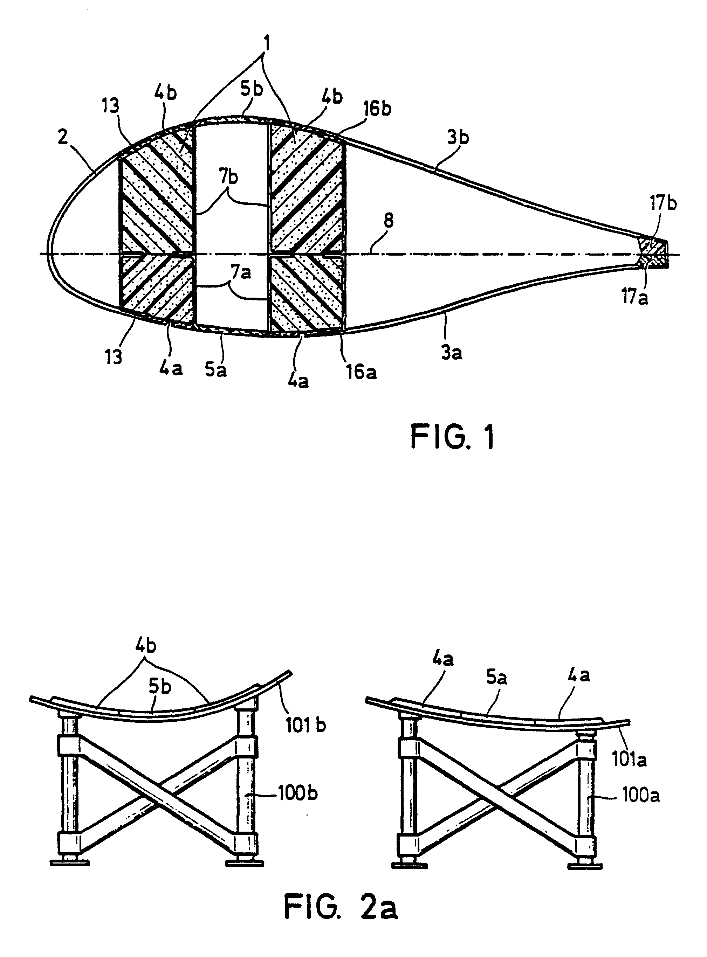

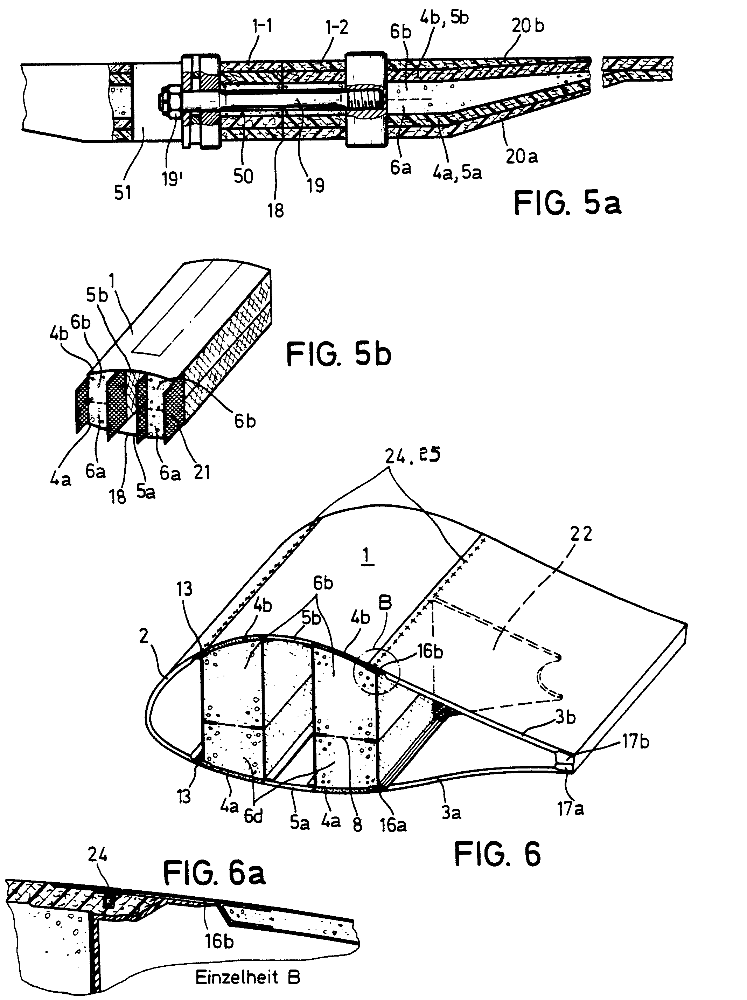

Ausweislich Fig. 1 ist das Rotorblatt im Querschnitt in drei Module unterteilt, nämlich ein Mittelteil 1 der den Flügelholm enthält, eine Nasenschale 2 und eine Profilfahne 3. Der Flügelholm besteht aus unidirektionalen Gurt-Laminaten 4 und einer Schaum-Steinheit 6. Bei sehr Großen Flügeln können auch noch Trennstellen in Blatt-Längsrichtung festgelegt werden (vgl. dazu weiter unten Fig. 5a, b).

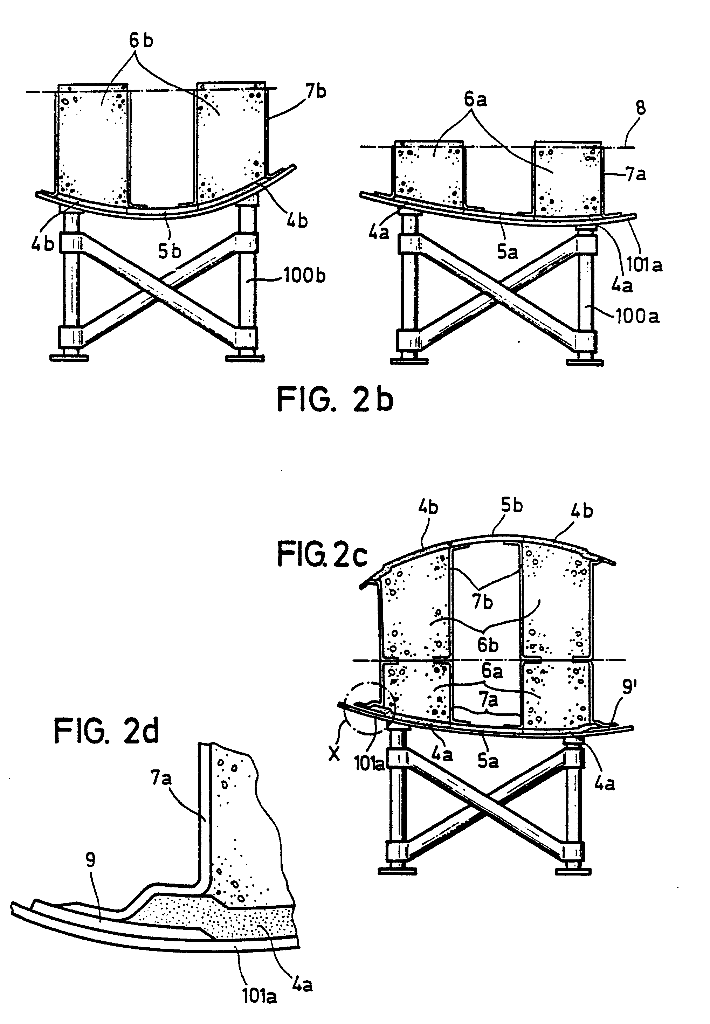

Fig. 2 erläutert die schaumkerngestützte Herstellung des Mittelteils 1 in getrennten Formschalen auf getrennten Formtischen 100a und 100b.

Dabei werden die Gurt-Laminate 4a bzw. 4b des Holms in Längsrichtung des Rotorblatts und auch schubübertragende Laminate 5a bzw. 5b in Form-Schalen 101a bzw. 101b eingelegt. Zur Herstellung der Laminate eignen sich insbesondere das Handlaminier-, das Prepreg- und das Vakuuminjektions-Verfahren.

Nach der Aushärtung werden zwei grob zugeschnittene Schaum-Steg-Einheits-Hälften 6a und 6b mit den zugehörigen Gurt-Laminaten 4a bzw. 4b verklebt und vorzugsweise an den Seiten durch Steg-Laminate 7a bzw. 7b verstärkt.

Die Form-Schalen 101a und 101b können an den Seitenkanten des Mittelteils 1 (vgl. Fig. 2c und d) mit einer Leiste 9 so aufgedickt sein, daß ein Durchsatz zur Befestigun der Nasenschale 2 auf der einen Seite und der Profilfahne 3 auf der anderen Seite entsteht.

Entlang Trennebenen 8 werden überstehende Schaum-Steg-Teile beschnitten, um sowohl Fertigungstoleranzen als auch Formungenauigkeiten sowohl im Mittelteil 1 als auch bei der Nasenschale 2 ausgleichen zu können (vgl. Fig. 2b).

Anschließend wird die eine Mittelteil-Hälfte (links in Fig. 2a und b) entformt und an der Trennebene 8 mit der Gegen-Hälfte verklebt, so daß der fertige Mittelteil 1 entsteht, der in seiner Außenkontur unmittelbar dem Flügel-Profil entspricht (im Gegensatz zu eingangs erörtertem bekannten Stand der Technik, wo das Flügel-Profil erst durch zusätzliche Verkleidungen erreicht wird).

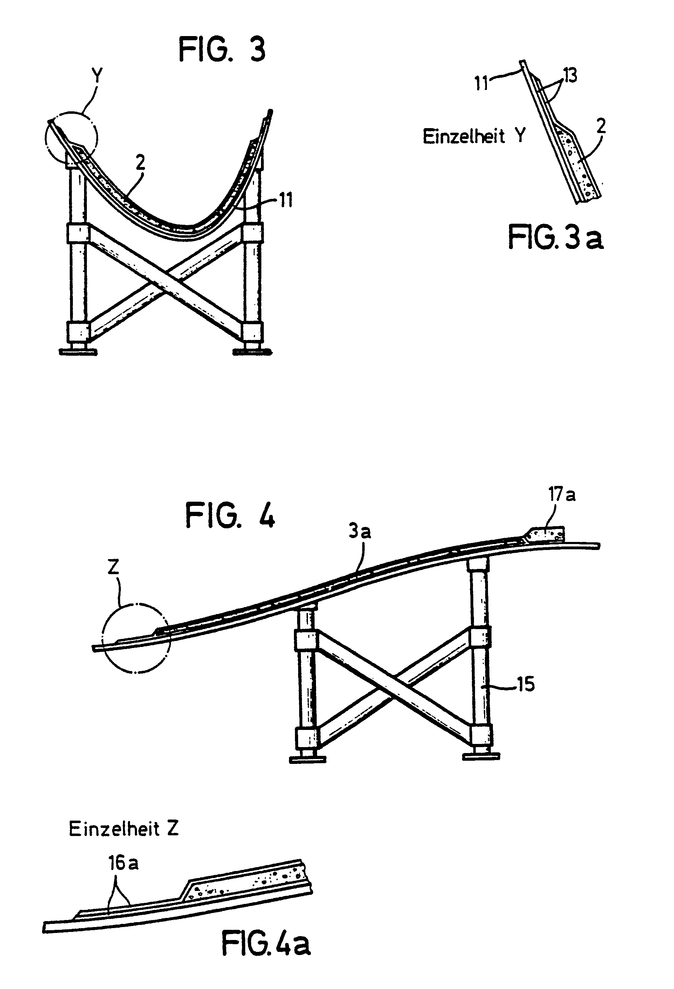

Fig. 3 zeigt, wie die Nasenschale 2 in einer Form 11 oder mehreren Formen durch an sich bekannte Laminier-Verfahren hergestellt wird. Vorzugsweise wird eine leichte Sandwich-Struktur gebaut, damit eine eigensteife Schale entsteht. Dabei werden die Ränder als dünne Laminatschichten 13 ausgebildet, die bei der Montage am Mittelteil 1, als elastische Fahnen dienen, die kleine Ungenauigkeiten ausgleichen können.

Fig. 4 erläutert die Herstellung der Profilfahne 3, die für Ober- und Unterseite getrennt in Formen 15 vorzugsweise als leichte Sandwich-Struktur hergestellt wird. Sie erhält ebenfalls eine elastische Fahne 16a (bzw. 16b) an den Seiten, die mit dem Holm 1 verbunden werden. Wenn die Profil-Form es vorsieht, kann eine dicke Profil-Endkante durch Aufkleben von Schaumleisten 17a (bzw. b) erzielt werden.

Fig. 5a und b zeigt die Unterteilung des Holms 1 in Module 1-1 und 1-2 in Rotorblatt-Längsrichtung. Dabei werden die Laminate 4a, 5a bzw. 4b, 5b in der Nähe der Trennstellen 18 durch Zusatz-Laminate 20a bzw. 20b aufgedickt. Diese dicken Laminate erhalten in für sich bekannter Weise (vgl. die Druckschrift der Anmelderin DE-A-3 109 566, (offengelest am 14.10.82) Längs-Bohrungen 50 und Quer-Bohrungen 51 zur Aufnahme von Verbindungselementen 19 und 19'.

Beim Zusammenbau der Segmente 1-1 und 1-2 werden die Verbindungselemente 19 und 19' eingesetzt und vorgespannt. Nach diesem Zusammenbau werden Laminate 21 als Querkraftverbindung aufgebracht.

Fig. 6 erläutert den Zusammenbau des Mittelteils 1 mit der Nasenschale 2 und der Profilfahne 3.

Diese Module können getrennt transportiert und am Aufstellungsort der Windenergie-Anlage wie folgt zusammengebaut werden:

Die Profilfahnen-Hälften 3a und 3b werden an der Endkante, d.h. den Schaumleisten 17a bzw. 17b, miteinander verklebt und mit dem Mittelteil 1 durch Verklebungen 25 und Verschraubungen 24 (vgl. Fig. 6a) verbunden. Rippen 22 helfen dabei beim Positionieren und werden als Versteifung mit den Profilfahnen-Hälften 3a und 3b und dem Mittelteil 1, verklebt.

Die Nasenschale 2 wird ebenfalls mit dem Mittelteil 1 verklebt und verschraubt (ähnlich den Verschraubungen 24 in Fig. 6a). Die Verschraubungen 24 geben der Verklebung den nötigen Anpreßdruck und verhindern so eine Schälung.

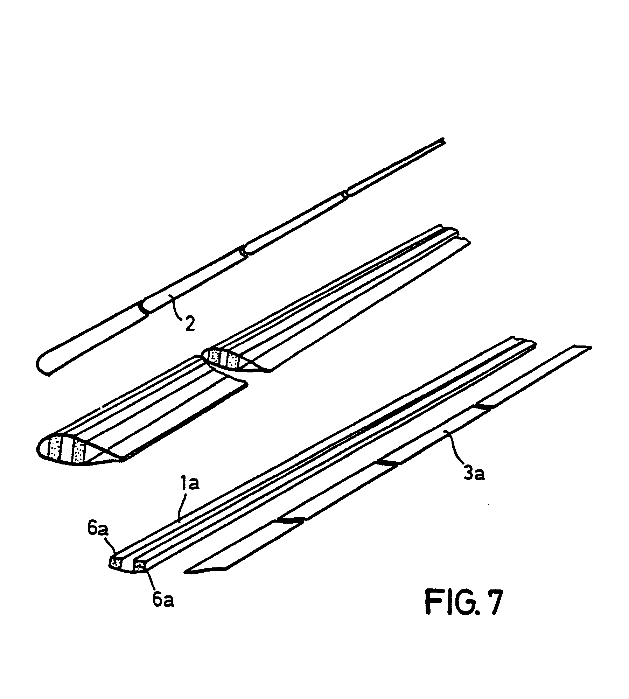

Fig. 7 zeigt schließlich ein fertiges Rotorblatt, soweit es erfindungsgemäß aufgebaut ist, d.h. ohne den Rotorkopf und ohne die Blattspitze (sowie ggf. einen dazu unmittelbar benachbarten Rotorblatt-Abschnitt), die in Vollschaum-Bauweise hergestellt sein können. Dabei sind die Bezugszeichen im wesentlichen weggelassen, mit 1a ist die untere Mittelteil-Hälfte bezeichnet.

**Patentansprüche**

1. Aerodynamischer Großflügel insbesondere Rotorblatt für große Windenergie-Anlagen, mit gesondert hergestellten und anschließend zusammengefügten, den Flügelquerschnitt bildenden Modulen von denen der eine mit einem Holm aus oberen und unteren unidirektionalen Faserverbund-Gurtlaminaten und aus einem stützend zwischen diesen angeordneten Schaumkern sowie mit einem den oberen und unteren Profilschalenabschnitt bildenden Außenhautlaminat versehen ist,

dadurch gekennzeichnet, daß

der Flügel aus mindestens drei Modulen, nämlich einer Nasenschale (2) einer Profilfahne (3) und einem Flügelmittelteil (1) zusammengesetzt ist daß als Schaumkern eine sich bis zu dem oberen und dem hiervon getrennt ausgebildeten, unteren Außenhautlaminat (4a, 5a und 4b, 5b) des Mittelteils (1) erstreckende und mit diesen unmittelbar verklebte Schaum-Steg-Einheit (6a, 6b) vorgesehen ist und daß die unidirektionalen Ober- und Untergurt-Laminate (4a, 4b) des Holms im Holmbereich die Außenhaut bilden.

2. Flügel nach Anspruch 1,

dadurch gekennzeichnet, daß

die Außenhautlaminate (4a, 5a u. 4b, 5b) des Mittelteils (1) jeweils ein zwischen zwei nebeneinanderliegenden, längskraftübertragenden unidirektionalen Gurtlaminaten (4a, 4b) eingelegtes schubübertragend ausgebildetes Laminat (5a, 5b) enthalten, und daß die Schaum-Steg-Einheit (6a, 6b) nur die unidirektionalen Gurtlaminate (4a, 4b) stützt.

3. Flügel nach Anspruch 2,

dadurch gekennzeichnet, daß

die Laminate (4a, 4b u. 5a, 5b) durch Handlaminier-Prepreg- oder Vakuuminjektionsverfahren hergestellt sind.

4. Flügel nach einem der vorhergehenden Ansprüche,

dadurch gekennzeichnet, daß

das Mittelteil (1) aus einer unteren und einer oberen Hälfte besteht die je ein Außenhautlaninat (4a, 5a u. 4b, 5b) des Mittelteils (1) und eine Schaum-Steg-Einheitshälfte (6a, 6b) besitzen und an den zugewandten beschnittenen Endflächen der Schaum-Steg-Einheitshälften (6a, 6b) miteinander verklebt sind (Fig. 2).

5. Flügel nach Anspruch 4

dadurch gekennzeichnet, daß

die Schaum-Steg-Einheitshälften (6a, 6b) als grobe Zuschnitte mit den Außenhautlaminaten (4a, 5a u. 4b, 5b) des Mittelteils (1) verklebt sind (Fig. 2).

6. Flügel nach einem der vorhergehenden Ansprüche,

dadurch gekennzeichnet daß

die Schaum-Stege (6a, 6b) an den Längs-Seiten mit Steg-Laminat (7a, 7b) verstärkt sind (Fig. 2).

7. Flügel nach einem der vorhergehenden Ansprüche,

dadurch gekennzeichnet, daß

die Außenhautlaminate (4a, 5a u. 4b, 5b) des Mittelteils (1) an beiden Längsseiten eine zurückspringende Stufe zum Durchsatz der Nasenschale (2) bzw. der Profilfahne (3) besitzen (Fig. 2).

8. Flügel nach einem der vorhergehenden Ansprüche,

dadurch gekennzeichnet, daß

die Nasenschale (2) ein Laminat ist.

9. Flügel nach Anspruch 8,

dadurch gekennzeichnet, daß

das Laminat eine leichte Sandwich-Struktur ist.

10. Flügel nach Anspruch 8 oder 9,

dadurch gekennzeichnet, daß

die Nasenschale (2) in elastischen Fahnen (13) ausläuft (Fig. 3).

11. Flügel nach einem der vorhergehenden Ansprüche,

dadurch gekennzeichnet daß

die Profilfahne (3) aus einer unteren und einer oberen Hälfte (3a, 3b) besteht (Fig. 1, 6).

12. Flügel nach Anspruch 11,

dadurch gekennzeichnet, daß

die Profilfahnen-Hälften (3a, 3b) eine leichte Sandwich-Struktur sind (Fig. 1, 6).

13. Flügel nach Anspruch 11 und 12,

dadurch gekennzeichnet, daß

die Profilfahnen-Hälften (3a, 3b) je eine elastische Fahne (16a, 16b) an der mit dem Holm (1) zu verbindenden Längsseite besitzen (Fig. 1, 4, 4a).

14. Flügel nach einem der Ansprüche 11 -13,

dadurch gekennzeichnet, daß die Profilfahnen-Hälften (3a 3b) je eine aufgeklebte Schaumleiste (17a, 17b) als dicke Profilendkante besitzen (Fig. 1, 4, 6,).

15. Flügel nach einem der Ansprüche 11 - 14,

dadurch gekennzeichnet, daß

die Profilfahnen-Hälften (3a, 3b) an ihrer Profilendkante miteinander verklebt und mit dem Mittelteil (1) durch Verschraubung (24) und/oder Verklebung (25) verbunden sind und daß Rippen (22) als Positionier-Hilfe und als Versteifung mit den Profilfahnen-Hälften (3a, 3b) und dem Mittelteil (1) verklebt sind (Fig. 6, 6a).

16. Flügel nach einem der vorhergehenden Ansprüche,

dadurch gekennzeichnet, daß

die Nasenschale (2) mit dem Mittelteil (1) durch Verschraubung (24) und/oder Verklebung (25) verbunden ist (Fig. 1, 6, 6a).

17. Flügel nach einem der vorhergehenden Ansprüche,

dadurch gekennzeichnet, daß

das Mittelteil (1) in Flügel-Längsrichtung in Segmente (1-1, 1-2) unterteilt ist (Fig. 5a, 5b, 7).

18. Flügel nach Anspruch 17,

dadurch gekennzeichnet, daß

die Segmente (1-1, 1-2) in der Nähe ihrer gegenseitigen Verbindungsstellen (18) an den Außenhautlaminaten (4a, 5a u. 4b, 5b) des Mittelteils (1) mindestens im Gurt-Bereich durch eine Zusatz-Schicht (20) aufgedickt sind (Fig. 5a).

19. Flügel nach Anspruch 17 oder 18,

dadurch gekennzeichnet, daß

die Segmente (1-1, 1-2) an ihren gegenseitigen Verbindungsstellen (18) seitlich an der Schaum-Steg-Einheit (6a, 6b) Querkraftverbindungs-Schichten (21) besitzen (Fig. 5b).

20. Flügel nach Anspruch 18 oder 19

dadurch gekennzeichnet, daß

die Zusatz- bzw. Querkraftverbindungs-Schichten (20, 21) seitlich mit der Schaum-Steg-Einheit (6a, 6b) verbundene Laminate sind (Fig. 5a, 5b).

21. Flügel nach einem der Ansprüche 17-20, dadurch gekennzeichnet, daß die Segmente (1-1, 1-2) an ihren gegenseitigen Verbindungsstellen (18) Längs(50)- und Quer(51)-Bohrungen zur Aufnahme von Verbindungselementen (19a, 19b) besitzen (Fig. 5a).

22. Verfahren zur Herstellung des Flügels nach Anspruch 4, dadurch gekennzeichnet, daß das Mittelteil (1) in zwei getrennten Formschalen (101a, 101b) als zwei Mittelteil-Hälften schaumsteggestützt hergestellt wird, daß entlang einer Trennebene (8) überstehende Abschnitte der Schaumkern-Stege (6a, 6b) beschnitten werden, und daß eine Mittelteil-Hälfte entformt und an der Trennebene (8) mit der Gegen-Hälfte verklebt wird (Fig. 2).

23. Verfahren nach Anspruch 22 mit 7, dadurch gekennzeichnet, daß die Formschalen (101a, 101b) an den Längsseiten des Mittelteils (1) mit einer Leiste (9, 9') so aufgedickt werden, daß je ein Durchsatz zur Befestigung der Nasenschale (2) auf der einen Längsseite und der Profilfahne (3) auf der anderen Längsseite entsteht (Fig. 2c 2d).

24. Verfahren nach Anspruch 22 oder 23 dadurch gekennzeichnet, daß die Nasenschale (2) und/oder die Profilfahne (3) je in einer oder mehreren Formen (11) laminiert wird bzw. werden.

25. Verfahren nach einem der Ansprüche 22 - 24 zur Herstellung des Flügels nach Anspruch 19, dadurch gekennzeichnet, daß die Querkraftverbindungs-Schichten (21) nach dem Zusammenbau der Mittelteil-Segmente (1-1, 1-2) aufgebracht werden (Fig. 5a, 5b).

**Claims**

1. An aerodynamic large wing, more especially a rotor blade for large wind-energy installations, comprising modules which are produced separately and subsequently joined together and which form the cross-section of the wing and one of which is provided with a spar consisting of upper and lower unidirectional fibre-composite chord flange laminates and of a foam core arranged supportingly between these as well as with an outer-skin laminate which forms the upper and lower dish section portion, characterised in that the wing is composed of at least three modules, namely an airfoil leading section (2), an airfoil trailing section (3) and a wing central part (1), in that provided as foam core is a foam web unit (6a, 6b) which extends as far as the upper, and the lower one fashioned separately therefrom, outer-skin laminate (4a, 5a and 4b, 5b) of the central part (1) and which is bonded directly with these, and in that the unidirectional upper and lower chord flange laminates (4a, 4b) of the spar form in the spar region the outer skin.

2. A wing according to claim 1, characterised in that the outer-skin laminates (4a, 5a and 4b, 5b) of the central part (1) respectively contain a laminate (5a, 5b) which is designed in a shear-transmitting manner and which is inserted between two unidirectional chord flange laminates (4a, 4b) which transfer longitudinal force and which lie side-by-side, and in that the foam web unit (6a, 6b) supports only the unidirectional chord flange laminates (4a, 4b).

3. A wing according to claim 2, characterised in that the laminates (4a, 4b and 5a, 5b) are produced by handlaminating, prepeg or vacuum-injection processes.

4. A wing according to any one of the preceding claims, characterised in that the central part (1) consists of a lower and an upper half, which each possess an outerskin laminate (4a, 5a and 4b, 5b) of the central part (1) and a foam web unit half (6a, 6b) and are bonded to one another at the facing trimmed end surfaces of the foam web unit halves (6a, 6b) (Fig. 2).

5. A wing according to claim 4, characterised in that the foam web unit halves (6a, 6b) are bonded as rough blanks to the outer-skin laminates (4a, 5a and 4b, 5b) of the central part (1) (Fig. 2).

6. A wing according to one of the preceding claims, characterised in that the foam-webs (6a, 6b) are reinforced at the longitudinal sides with web laminate (7a, 7b) (Fig. 2).

7. A wing according to any one of the preceding claims, characterised in that the outer-skin laminates (4a, 5a and 4b, 5b) of the central part (1) possess at both longitudinal sides a reentrant step for the throughput of the airfoil leading section (2) or respectively of the airfoil trailing section (3) (Fig. 2).

8. A wing according to one of the preceding claims, characterised in that the airfoil leading section (2) is a laminate.

9. A wing according to claim 8, characterised in that the laminate is a lightweight sandwich structure.

10. A wing according to claim 8 or 9, characterised in that the airfoil leading section (2) culminates in elastic extensions (13) (Fig. 3).

11. A wing according to one of the preceding claims, characterised in that the airfoil trailing section (3) consists of a lower and an upper half (3a, 3b) (Fig. 1, 6).

12. A wing according to claim 11, characterised in that the airfoil trailing section halves (3a, 3b) are a lightweight sandwich structure (Fig. 1, 6).

13. A wing according to claim 11 and 12, characterised in that the airfoil trailing section halves (3a, 3b) each possess an elastic extension (16a, 16b) at the longitudinal side that is to be connected to the spar (1) (Fig. 1, 4, 4a).

14. A wing according to any one of claims 11 to 13, characterised in that the airfoil trailing section halves (3a, 3b) each possess a glued-on foam strip (17a, 17b) as a thick trailing end edge (Fig. 1, 4, 6).

15. A wing according to any one of claims 11 to 14, characterised in that the airfoil trailing section halves (3a, 3b) at their trailing end edge are bonded to one another and are connected to the central part (1) by screwing (24) and/or by bonding (25), and in that ribs (22) are bonded as positioning aid and as stiffening to the airfoil trailing section halves (3a, 3b) and the central part (1) (Fig. 6, 6a).

16. A wing according to any one of the preceding claims, characterised in that the airfoil leading section (2) is connected to the central part (1) by screwing (24) and/or bonding (25) (Fig. 1, 6, 6a).

17. A wing according to any one of the preceding claims, characterised in that the central part (1) is subdivided in the longitudinal direction of the wing into segments (1-1, 1-2) (Fig. 5a, 5b, 7).

18. A wing according to claim 17, characterised in that the segments (1-1, 1-2) are thickened in the vicinity of their mutual connection points (18) on the outer-skin laminates (4a, 5a and 4b, 5b) of the central part (1) at least in the chord flange region by an additional layer (20) (Fig. 5a).

19. A wing according to claim 17 or 18, characterised in that the segments (1-1, 1-2) possess at their mutual connection points (18) laterally on the foam web unit (6a, 6b) transverse-force connection layers (21) (Fig. 5b).

20. A wing according to claim 18 or 19, characterised in that the additional or respectively transverse-force connection layers (20, 21) are laminates which are connected laterally to the foam web unit (6a, 6b) (Fig. 5a, 5b).

21. A wing according to any one of claims 17 to 20, characterised in that the segments (1-1, 1-2) possess at their mutual connection points (18) longitudinal (50) and transverse (51) bores for the reception of connecting elements (19a, 19b) (Fig. 5a).

22. A method of producing the wing according to claim 4, characterised in that the central part (1) is produced in foam-web-supported manner in two separate moulding dishes (101a, 101b) as two central-part halves, in that along a plane of separation (8) protruding portions of the foam-core webs (6a, 6b) are trimmed, and in that one central-part half is removed from the mould and is bonded at the plane of separation (8) to the counterhalf (Fig. 2).

23. A method according to claim 22 with 7, characterised in that the moulding dishes (101a, 101b) are so thickened at the longitudinal sides of the central part (1) with a strip (9, 9') that a respective throughput arises for the fastening of the airfoil leading section (2) on the one longitudinal side and of the airfoil trailing section (3) on the other longitudinal side (Fig. 2c, 2d).

24. A method according to claim 22 or 23, characterised in that the airfoil leading section (2) and/or the airfoil trailing section (3) is or are respectively each laminated in one or more moulds (11).

25. A method according to any one of claims 22 to 24 of producing the wing according to claim 19, characterised in that the transverse-force connection layers (21) are applied after the assembly of the central-part segments (1-1, 1-2) (Fig. 5a, 5b).

**Revendications**

1. Pale aerodynamique de grandes dimensions, notamment pale de rotor pour grandes installations d'énergie éolienne, composée de modules fabriqués separément puis assemblés pour former la section transversale de la pale, l'un des modules comprenant un longeron, composé de stratifiés de semelle supérieur et inférieur a renfort unidirectionnel de fibres de verre et d'un noyau de mousse disposé entre ces stratifiés de manière à leur fournir un appui, et un stratifié de revêtement extérieur formant les portions supérieure et inférieure de la coque de profil, caractérisée en ce que la pale est composée d'au moins trois modules, à savoir d'une coque de bord d'attaque (2), d'une coque de bord de fuite (3) et d'une partie médiane (1) de pale, que le noyau de mousse est une unité d'âme en mousse (6a, 6b) qui s'étend jusqu'aux stratifiés de revêtement (4a, 5a et 4b, 5b) supérieur et inférieur de la partie médiane (1), réalisés séparément, et qui est collée directement à ceux-ci, et que les stratifiés de semelle supérieur et inférieur (4a, 4b) à renfort unidirectionnel du longeron forment le revêtement extérieur dans la zone du longeron.

2. Pale selon la revendication 1, caractérisée en ce que les stratifiés de revêtement (4a, 5a et 4b, 5b) de la partie médiane (1) contiennent chacun un stratifié (5a, 5b) qui est réalisé pour transmettre les efforts tranchants et intercalé entre deux stratifiés de semelle (4a, 4b) à renfort unidirectionnel transmettant les efforts longitudinaux et disposés l'un à côté de l'autre, et que l'unité d'âme en mousse (6a, 6b) ne fournit un appui qu'aux stratifiés de semelle (4a, 4b) a renfort unidirectionnel.

3. Pale selon la revendication 2, caractérisée en ce que les stratifiés (4a, 4b et 5a, 5b) sont fabriques par des procédés de stratification manuelle, de préimprégnation ou d'injection sous vide.

4. Pale selon l'une quelconque des revendications précédentes, caractérisée en ce que la partie médiane (1) est composée d'une moitié inférieure et d'une moitié supérieure qui possèdent chacun un stratifié de revêtement (4a, 5a et 4b, 5b) de la partie médiane (1) et une moitié d'unité d'âme en mousse (6a, 6b) et sont collées l'une contre l'autre par les faces d'extrémité taillées, en regard, des moitiés (6a, 6b) de l'unité d'âme en mousse (fig. 2).

5. Pale selon la revendication 4, caractérisée en ce que les moitiés (6a, 6b) de l'unité d'âme en mousse sont collées en tant que decoupes grossières avec les stratifiés de revêtement (4a, 5a et 4b, 5b) de la partie médiane (fig. 2).

6. Pale selon l'une quelconque des revendications précédentes, caractérisée en ce que les âmes en mousse (6a, 6b) sont renforcées sur les côtes longitudinaux par du stratifié d'âme (7a, 7b) (fig. 2).

7. Pale selon l'une quelconque des revendications précédentes, caractérisée en ce que les stratifiés de revêtement (4a, 5a et 4b, 5b) de la partie médiane possèdent sur les deux côtés longitudinaux une partie étagée pour recevoir la coque de bord d'attaque (2) ou la coque de bord de fuite (3) (fig. 2).

8. Pale selon l'une quelconque des revendications précédentes, caractérisée en ce que la coque de bord d'attaque (2) est un stratifié.

9. Pale selon la revendication 8, caractérisée en ce que le stratifié est une structure sandwich légère.

10. Pale selon la revendication 8 ou 9, caractérisée en ce que la coque de bord d'attaque (2) se termine pas des bandes marginales (13) élastiques (Fig. 3).

11. Pale selon l'une quelconque des revendications précédentes, caractérisée en ce que la coque de bord de fuite (3) est composée d'une moitié inférieure et d'une moitié supérieure (3a, 3b) (figures 1, 6).

12. Pale selon la revendication 11, caractérisée en ce que les moitiés (3a, 3b) de la coque de bord de fuite sont des structures sandwich légères (figures 1, 6).

13. Pale selon la revendication 11 ou 12, caractérisée en ce que les moitiés (3a, 3b) de la coque de bord de fuite possèdent chacune une bande marginale élastique (16a, 16b) sur le côte longitudinal à relier au longeron (1) (figures 1, 4, 4a).

14.. Pale selon l'une quelconque des revendications 11 à 13, caractérisée en ce que les moitiés (3a, 3b) de la coque de bord de fuite possèdent chacune une barrette de mousse (17a, 17b) en tant qu'arête épaisse d'extrémité de bord de fuite (figures 1, 4, 6).

15. Pale selon l'une quelconque des revendications 11 à 14, caractérisée en ce que les moitiés (3a, 3b) de la coque de bord de fuite sont collées l'une contre l'autre à leur arête d'extrémité de bord de fuite et sont reliées à la partie médiane (1) par vissage (24) et/ou collage (25), et que des nervures (22) sont collées, en tant qu'éléments de positionnement et de raidissement, contre les motiés (3a, 3b) de la coque de bord de fuite et contre la partie médiane (1) (figures 6, 6a).

16. Pale selon l'une quelconque des revendications précédentes, caractérisée en ce que la coque de bord d'attaque (2) est reliée à la partie médiane (1) par vissage (24) et/ou collage (25) (figures 1, 6, 6a).

17. Pale selon l'une quelconque des revendications précédentes, caractérisée en ce que la partie médiane (1) est divisée en segments (1-1, 1-2) dans le sens de la longueur de la pale (figures 5a, 5b, 7).

18. Pale selon la revendication 17, caractérisée en ce que les segments (1-1, 1-2) sont épaissis, à proximité de leurs emplacements de liaison mutuelle (18), sur les stratifiés de revêtement extérieur (4a, 5a et 4b, 5b) de la partie médiane (1), au moins dans la zone des semelles, par une couche supplémentaire (20) (fig. 5a).

19. Pale selon la revendication 17 ou 18, caractérisée en ce que les segments (1-1, 1-2) possèdent des couches de liaison (21) de transmission d'efforts transversaux à leurs emplacements de liaison mutuelle (18) latéralement sur l'unité d'âme en mousse (6a, 6b) (fig. 5b).

20. Pale selon la revendication 18 ou 19, caractérisée en ce que les couches supplémentaires (20) ou de liaison (21) de transmission d'efforts transversaux sont des stratifiés reliés latéralement avec l'unité d'âme en mousse (6a, 6b) (figure 5a, 5b).

21. Pale selon l'une quelconque des revendications 17 à 20 caractérisée en ce que les segments (1-1, 1-2) possèdent à leurs emplacements de liaison mutuelle (18) des trous longitudinaux (50) et transversaux (51) destinés à la réception d'éléments de liaison (19a, 19b) (fig. 5a).

22. Procédé pour la fabrication de la pale selon la revendication 4, caractérisé en ce que la partie médiane (1) est réalisée dans deux coquilles de moule séparées (101a, 101b) sous la forme de deux moitiés de partie médiane à âme en mousse, que des portions des âmes (6a, 6b) du noyau de mousse qui dépassent un plan de jonction (8) sont taillées, et qu'une moitié de partie médiane est démoulée et collée sur le plan de jonction (8) contre l'autre moitié (fig.2).

23. Procédé selon la revendication 22 pour la fabrication de la pale avec la revendication 7, caractérisé en ce que les coquilles de moule (101a, 101b) sont épaissies avec une barrette (9 9') sur les côtés longitudinaux de la partie médiane, de sorte qui'l se forme une partie étagée pour recevoir la coque de bord d'attaque (2) sur un côté longitudinal et la coque de bord de fuite (3) sur l'autre côté longitudinal (figures 2c, 2d).

24. Procédé selon la revendication 22 ou 23, caractérisé en ce que la coque de bord d'attaque (2) et/ou la coque de bord de du fuite (3) sont stratifiés chacun dans un ou plusieurs moules (11).

25. Procédé selon l'une quelconque des revendications 22 à 24 pour la fabrication de la pale selon la revendication 19, caractérisé en ce que les couches de liaison (21) de transmission d'efforts transversaux sont appliquées après l'assemblage des segments (1-1, 1-2) de la partie médiane (figures 5a, 5b).

FIG. 1

FIG. 2a

FIG. 2b

FIG. 2c

FIG. 2d

# FIG. 3

2

11

Y

Einzelheit Y

11

13

2

## FIG. 3a

# FIG. 4

Z

3a

17a

15

## Einzelheit Z

16a

## FIG.4a

FIG. 5a

FIG. 5b

FIG. 6

FIG. 6a

Einzelheit B

7

FIG. 7